# EUROPEAN PATENT SPECIFICATION

(11) **EP 1 172 420 B1**
(45) Date of publication and mention of the grant of the patent: **26.10.2005**
(21) Application number: 01114269.2
(22) Date of filing: 12.06.2001
(51) Int. Cl.: C09D 5/08

(54) **Chromium-free paint compositions and painted metal sheets**
Chromfreie Lackzusammensetzungen und lackierte Metallbleche
Compositions de peintures exemptes de chrome et tôles peintes

(30) Priority: 12.07.2000 JP 2000210718
(43) Date of publication of application: 16.01.2002
(73) Proprietor: NISSHIN STEEL CO., LTD., Chiyoda-ku Tokyo 100-8366 (JP)
(72) Inventor: Yano, Hirokazu, Steel & Tech. Development Lab., Ichikawa-shi, Chiba-ken, 272-0011 (JP); Udagawa, Yoshikatsu, Steel & Tech. Development Lab, Ichikawa-shi, Chiba-ken, 272-0011 (JP); Kiyotsuka, Minoru, Steel & Tech. Development Lab., Ichikawa-shi, Chiba-ken, 272-0011 (JP); Takatsu, Kiyoshi, Steel & Tech. Development Lab., Ichikawa-shi, Chiba-ken, 272-0011 (JP)
(74) Representative: Müller-Boré & Partner Patentanwälte

(56) References cited:
- EP-A- 0 170 356
- EP-A- 0 316 066
- PATENT ABSTRACTS OF JAPAN vol. 1997, no. 05, 30 May 1997 (1997-05-30) & JP 09 012391 A (SUMITOMO METAL IND LTD), 14 January 1997 (1997-01-14)

## Description

The present invention relates to paint compositions containing a Cr-free corrosion inhibitor and also a painted metal sheet excellent in corrosion resistance.

A pre-coated steel sheet has been broadly used in various fields such as a surfacing member for electric home appliance or an air conditioner and other goods, due to its good productivity compared with a steel sheet, which is formed to an objective shape prior to application of paint.

The pre-coated steel sheet is manufactured by applying synthetic resin paint to both surfaces or one surface (which will be an external surface of a product) of a steel sheet, and baking the applied paint to form a paint layer. A corrosion inhibitor is commonly added to the resin paint in order to improve corrosion resistance of the paint layer. Adhesiveness of the paint layer is enhanced by chemically converting the surface of a steel sheet to a chromated or phosphated state prior to paint application. The chemically converted surface layer also effects on improvement of corrosion resistance.

In a process of manufacturing a painted steel sheet having a single coat, one kind of paint containing a color pigment and a corrosion inhibitor is applied to the surface and then baked. In a process of manufacturing a painted steel sheet having two or more coats, a primer containing an extender and a corrosion inhibitor is applied to a surface of the steel sheet, and then intercoat and topcoat paints, which do not contain a corrosion inhibitor, are applied to the undercoat. A back surface of the steel sheet may be also coated with paint containing a corrosion inhibitor.

Chromium compounds or pigments based on chromium compounds, e.g. zinc chromate, strontium chromate, red chromate and red silicochromate, have been used so far as a corrosion inhibitor, due to excellent corrosion-inhibiting faculty. However, there is a stronger demand in these days for provision of a steel sheet coated with a paint layer free from chromium compounds, accounting harmful influences on the environment. In order to cope with such the demand, a corrosion inhibitor prepared from porous silica particles, to which Ca, Zn, Co, Pb, Sr or Ba ion is bonded by ion-exchange, is proposed instead of chromium compounds.

The proposed corrosion inhibitor captures corrosive ions such as hydrogen ion and discharges the bonded ion in return. Especially, Ca ion-bonded corrosion inhibitor performs good corrosion-inhibiting faculty. Such a corrosion inhibitor is ordinarily added to paint at a ratio of 2-50 parts by weight based on 100 parts by weight of resinous components in a paint layer. However, the Ca ion-bonded corrosion inhibitor is somewhat insufficient of corrosion and moisture resistance in comparison with chromium compounds, so that blisters often occur in a paint layer in a wet atmoshpere.

The present invention aims at provision of a metal sheet coated with a resin paint containing a corrosion inhibitor prepared from Ca ion-bonded silica particles whose corrosion inhibiting faculty is enhanced by coexistence of a polyphosphate.

The present invention proposes new paint composition containing a corrosion inhibitor prepared from porous silica particles, to which Ca ion is bonded by ion-exchange, together with a polyphosphate at a ratio predetermined in relation with a ratio of the corrosion inhibitor.

The polyphosphate is preferably aluminum pyrophosphate, aluminum metaphosphate or aluminum dihydrogentripolyphosphate. Especially, aluminum dihydrogentripolyphosphate performs best results. The polyphosphate may be used in a state mixed or coated with zinc oxide, titanium oxide, magnesium compound, a silane coupling agent or silicone oil, to improve corrosion resistance and storage stability.

Ca-bonded silica particles (hereinafter referred to as "the corrosion inhibitor **A**") are generally added to resin paint at a ratio of 2-50 parts by weight based on 100 parts by weight of resinous components of the paint. The polyphosphate (hereinafter referred to as "the polyphosphate **B**") is added to the resin paint at an **A/B** weight ratio of 60/40 to 5/95 and at an **A**+**B** ratio of 5-150 parts by weight based on 100 parts by weight of resinous components of the paint.

The proposed paint is used for formation of an undercoat or a single coat on a base metal sheet such as a steel sheet plated with a Zn, alloyed Zn, Zn-5%Al or Zn-55%Al layer. A surface of the base metal sheet is preferably chemically processed to a state affinitive to the paint.

The inventors have researched the reason why the corrosion inhibitor A does not exhibit well corrosion inhibiting faculty as compared with a conventional corrosion inhibitor based on chromium compounds especially in a wet atmosphere, and discovered that an effect of Ca ion bonded to silica particles is not maintained over a long term since Ca ion is easy to dissolve in water permeated into a paint layer.

The corrosion inhibitor **A** could be improved in moisture resistance by coating silica particles with hydrophobic films such as a silane coupling agent or silicone oil in order to suppress dissolution of Ca ion. However, such a hydrophobic coating closes pores of the silica particles and scarcely permits dissolution of Ca ion, resulting in degradation of corrosion resistance. The inventors have researched and examined various means to suppress dissolution of Ca ion, and hit upon addition of a polyphosphate to paint.

The polyphosphate **B** makes ionic bond similar to chelate bond on surfaces of silica particles. The ionic bond controls dissolution of Ca ion, but does not completely inhibit dissolution of Ca ion. Dissolution of Ca ion may be also suppressed by a pH-buffering effect of the polyphosphate **B** to moderate acidification caused by corrosive ions such as hydrogen ion.

The polyphosphate **B** is preferably added to resin paint at an **A/B** weight ratio of 60/40 to 5/95 and also at an **A**+**B** ratio of 5-150 parts by weight based on 100 parts by weight of resinous components of the paint, in order to most efficiently realize the effect of the polyphosphate **B**.

Addition of the polyphosphate **B** at the controlled ratio ensures continuous dissolution of Ca ion over a long term without degradation of the corrosion inhibitor **A**. Excessive addition of the polyphosphate **B** unfavorably suppresses dissolution of Ca ion, while shortage of the polyphosphate **B** causes occurrence of blisters in a paint layer due to poor moisture resistance. The **A**+**B** ratio in the range of 5-150 parts by weight is also important to form a paint layer good of corrosion resistance, adhesiveness and workability.

Ca ion is bonded to silica particles as the corrosion inhibitor **A** at a ratio of 3-40% in general. A ratio of the polyphosphate **B** is adjusted in response to amounts of the corrosion inhibitor **A**. For instance, a ratio of the polyphosphate is kept higher as increase of Ca ion bonded to the corrosion inhibitor **A**, but kept lower as decrease of Ca ions bonded to the corrosion inhibitor **A**.

There are no restrictions on a kind of resin paint, to which the corrosion inhibitor **A** and the polyphosphate **B** are added, but ordinarily based on polyester, macromolecular polyester, epoxy, epoxy-denatured polyester, epoxy-denatured macromolecular polyester or polyether sulfonate. Molecular weight, glass transition temperature and cross-link density of the resin paint are properly adjusted together with ratios of a curing agent and other pigments, accounting use of a painted steel sheet. For instance, a paint layer good of workability is obtained from resin paint, whose glass transition temperature is adjusted at a level of 40°C or lower to increase elongation at a higher ratio above 50%.

The resin paint may be applied as a single coat on a metal sheet or as an undercoat which will be further coated with a topcoat. A single coat is preferably of 3-20µm in thickness, while an undercoat is preferably of 1-15µm in thickness. Of course, an intercoat may be formed between the undercoat and the topcoat, as occasion demands. If intermediate or topcoat paint contains the corrosion inhibitor **A**, the polyphosphate **B** is preferably added to the paint in order to maintain the effect of the corrosion inhibitor **A** over a long term.

A base metal sheet, to which the resin paint is applied, is preferably a steel sheet coated with a Zn, alloyed Zn, Zn-5%Al alloy or Zn-55%Al alloy layer due to good corrosion resistance. Such a steel sheet is favorably chemically processed prior to paint application, so as to improve adhesiveness of paint layer(s) and corrosion resistance.

Chemical processing is typically chromating. But, other Cr-free processing so as to form a phosphate, silicate, zirconate, manganate or titanate film on a surface of a base metal sheet is adoptable instead of chromating, in order to inhibit dissolution of even a tiny amount of chromium compounds.

Among the Cr-free processings, fluoriding realizes most effective results on corrosion resistance of a painted steel sheet. When a surface of the base metal sheet is chemically converted to a fluorided state at a ratio of 0.5-500mg/m² calculated as deposited fluorine and/or at a ratio of 0.1-500mg/m² calculated as deposited metals in total, a paint film formed thereon is remarkably improved in corrosion resistance. Such a fluorided surface layer is formed by treating the surface of the base metal with a chemical agent containing one or more of fluoroacids. One or more of H₂TiF₆, H₂ZrF₆, H₂SiF₆, H₂GeF₆, H₂SnF₆ and HBF₄ are suitable for the purpose. Especially, H₂TiF₆ exhibits best corrosion-inhibiting faculty.

The fluorided surface layer is a corrosion-resistant coat composed of fluorine and metals such as Ti decomposed from fluoroacids, which are deposited on a surface of a metal sheet activated by fluoroacids dissolved in water. Metal components originated in the fluoroacid are reacted with hydroxyl groups of resin primer and also reacted with phosphoric acid discharged from the polyphosphate **B** in the undercoat. The surface layer of the metal sheet, which has been-activated by etching, is reacted with Ca ion supplied from the corrosion inhibitor **A** in the undercoat, so bonding reaction of resin paint to the surface is accelerated. Consequently, the undercoat is firmly fixed to the surface of the base metal sheet, and a corrosion-resistant layer is generated at the boundary between the base metal sheet and the undercoat. Fluoric ion is also reacted with Ca ion supplied from the corrosion inhibitor **A** in the undercoat and converted to a stable compound such as calcium fluoride. The stable compound serves as a barrier and further strengthens the fluorided surface layer.

The fluorided coat is preferably formed at a ratio of 0.5-500mg/m² calculated as deposited fluorine or at a ratio of 0.1-500mg/m² calculated as deposited metals such as Ti, Zr, Hf, Si, Ge, Sn and **B** in total, in order to gain most advantageous effects on corrosion resistance.

The fluorided coat may further contain one or more of oxides, hydroxides, phosphates, carbonates or other salts of Ti, Zr, Mo, Si, Al, Hf, Ge and Sn. These compounds are dissolved or dispersed in the chemical agent. Other additives, e.g. polyvinyl alcohol, tannic acid, starch, corn starch, water-soluble or dispersible polymer such as acrylic resin, a silane coupling agent, a titanium coupling agent, a surfactant, etc., may be optionally added to the chemical agent.

The chemical agent is applied to a surface of a base metal sheet by a roll-type applicator, spraying or dipping. Thereafter, the surface of the base metal sheet is dried without washing, to form the fluorided coat thereon.

After the fluorided coat is formed on a surface of a base metal sheet, resin paint is applied to the surface by a conventional paint-applying process such as roll-type applying, curtain-flow applying, spraying or dipping. The applied paint is then baked to form an undercoat or a single coat on the surface of the base metal sheet. Primer paint may contain various additives, e.g. inorganic pigments such as titanium oxide, calcium carbonate and silica other than the corrosion inhibitor **A** and the polyphosphate **B**.

Various resin-paint such as polyester, urethane, vinyl chloride, acrylic, polyether sulfonate, silicone or fluoric resin may be used for formation of a topcoat without any special restrictions. A kind, molecular weight, glass-transition temperature and pigmentary dosage of topcoat resin paint are properly adjusted in response to use of a painted metal sheet as an interior member, cladding, etc.. **PTFE** (polytetrafuluoroethylene) may be added to the topcoat paint. An intercoat may be optionally formed on an undercoat prior to application of topcoat paint, by 3-coat process. Of course, the painted metal having a single coat can be manufactured by 1-coat process. Paint applied to a base metal sheet is ordinarily baked by hot air in a continuous coating line.

### EXAMPLE

### Example 1:

Galvanized steel sheets (of 0.5mm in thickness, Zn deposition ratio of 45g/m² per single surface) were chemically pretreated with a Cr-free phosphating agent (**I**), **II** a Cr-free silicating agent (**II**), a Cr-free zirconating agent (**III**), a Cr-free manganating agent (**IV**), and a Cr-free titanating agent (V), as shown in **Table 1**.

Thereafter, epoxy-denatured macromolecular polyester resin paint was applied to each steel sheet and baked 40 seconds at a maximum temperat ure of 215°C to form a paint layer of 10µm in dry thickness.

Paint compositions used in **Example 1** contained the corrosion inhibitor **A** (i.e., porous silica particles to which Ca ion was bonded by ion-exchange) and the polyphosphate **B**. Ratios of the polyphosphate in relation with the corrosion inhibitor **A** are shown in **Table 1**.

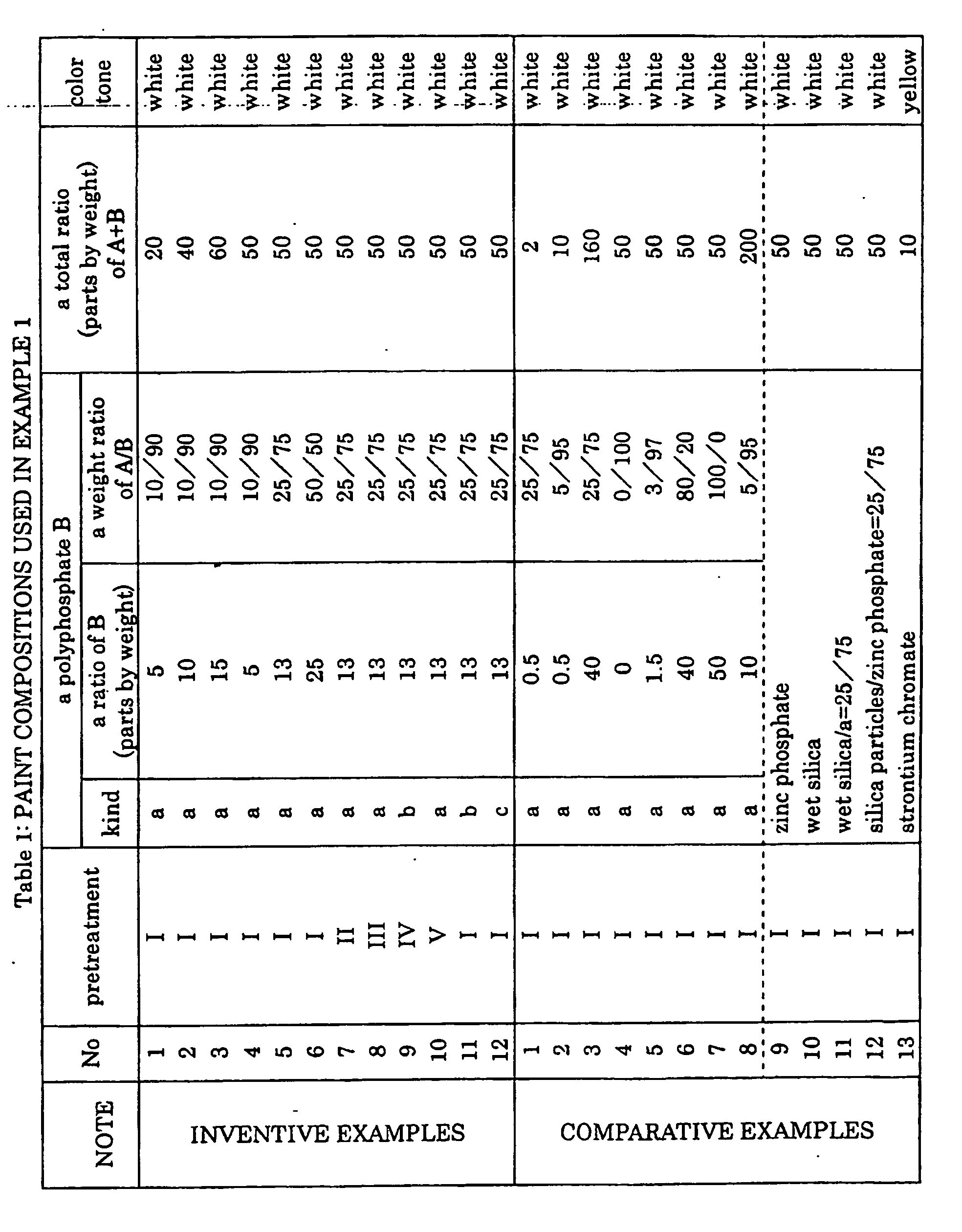

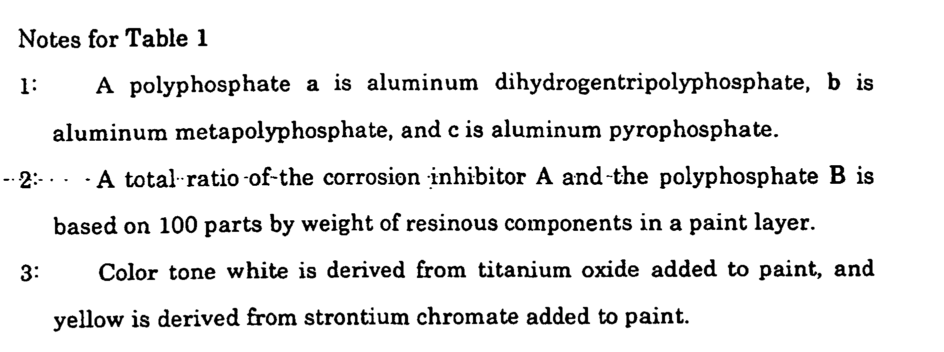

After the applied paint was dried, each painted steel sheet was examined by the following coating performance test. Test results are shown in **Table 2** (for inventive examples) and **Table 3** (for comparative examples). Test dipping in boiling water

Each test piece was immersed 2 hours in boiling water and raised therefrom. The test piece was observed at its external appearance and evaluated as follows:
○ : no faults
Δ : occurrence of blisters or dull appearance
× : occurrence of great blisters or dull appearance

The test piece was then examined by a taping test, whereby the test piece was bent with 0t, an adhesive tape was stuck onto a bent part, and then the adhesive tape was peeled off the bent part. Thereafter, the paint layer remaining on the surface of the steel sheet was checked and evaluated as follows:
○ : no faults
Δ : partial peeling-off of a paint layer
× : significant peeling-off of a paint layer

### Tests for corrosion and moisture resistance

Each test piece was cross-cut with injuries extending to a steel base, and then subjected to a 240 hours-salt water spray test regulated by JIS **Z2371** as a corrosion resistance test. The same cross-cut test piece was held 240 hours in an atmosphere at 50°C with 98%RH for a moisture resistance test. Thereafter, the test piece was observed at its flat part, and maximum widths of blisters in a paint layer were measured at a lower burred part of a side face and at one side of a cross - cut part. Results were evaluated as follows:

### External appearance at a flat part

○ : no faults
Δ : occurrence of blisters or dull surface
× : significant blisters or dull surface

### Maximum width of blisters at a lower burred part of a side face

ⓞ : not more than 1mm
○ : 1-3mm
Δ : 3-6mm
× : more than 6mm

### Maximum width of blisters at one side of a cross-cut part

ⓞ : no blisters
○ : not more than 1mm
Δ : 1-2mm
× : more than 2mm

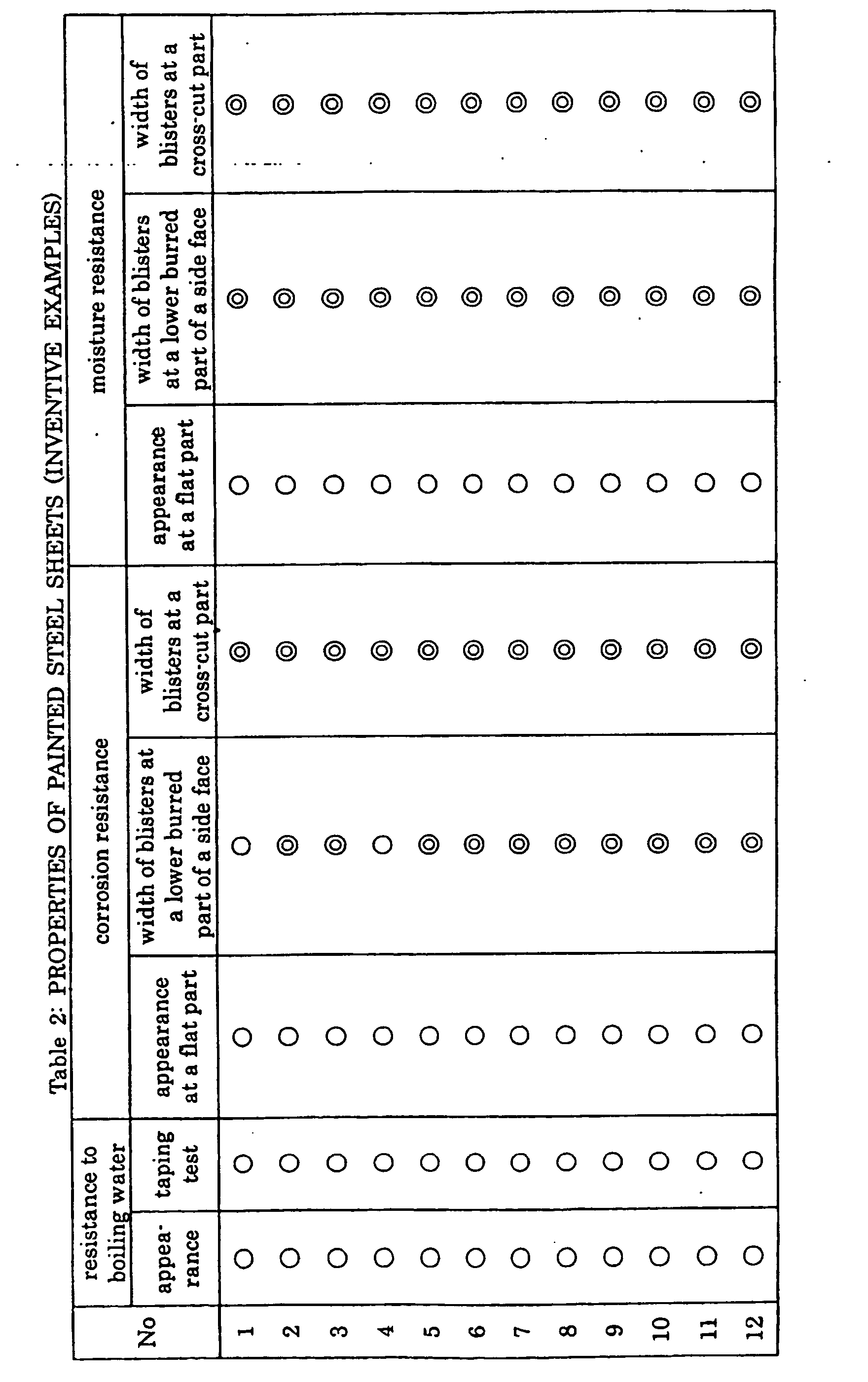

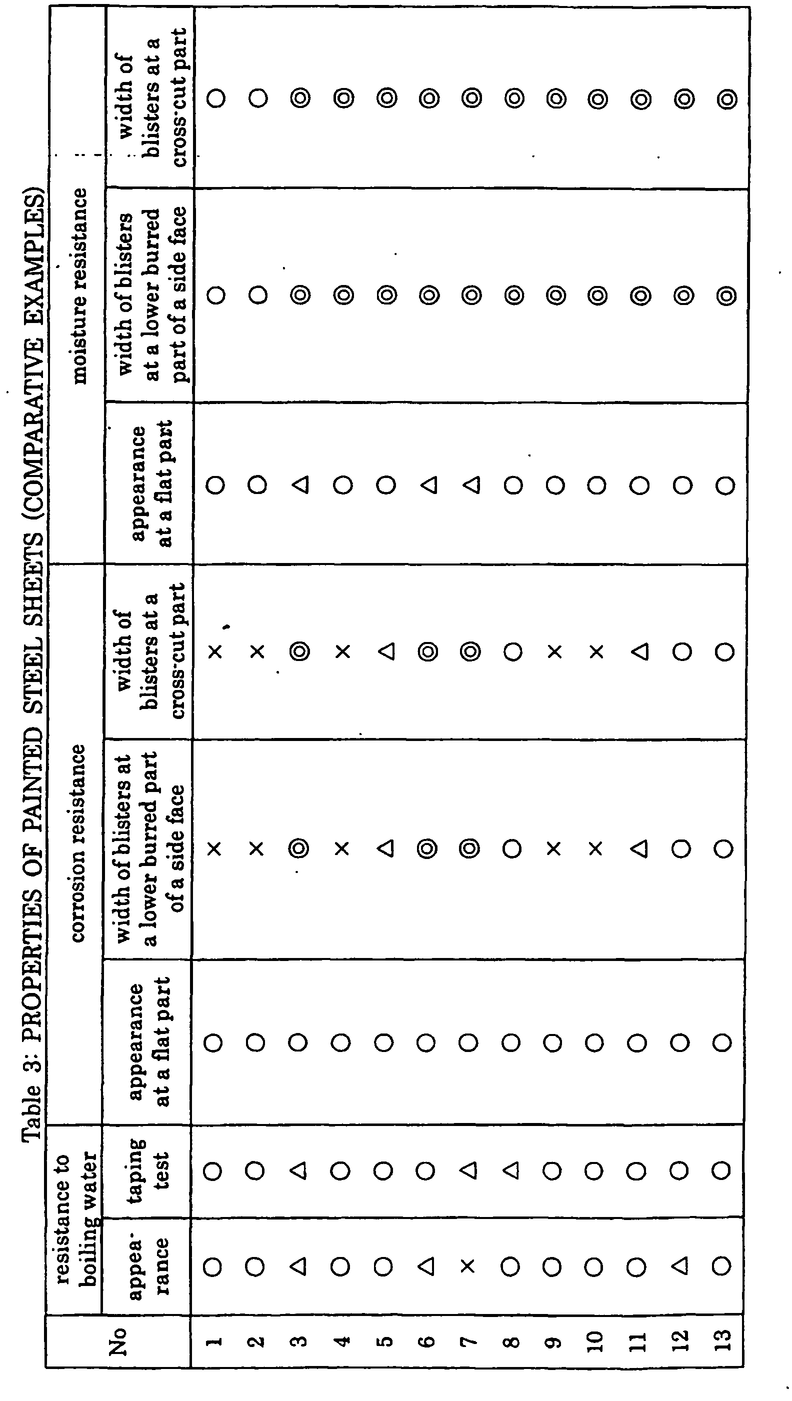

### Example 2:

After the same steel sheets as in **Example 1** were chemically pretreated in the same way, epoxy-denatured macromolecular polyester primer paint was applied to each steel sheet and then baked 30-seconds at a maximum temperature of 215°C to form an undercoat of 5µm in dry thickness. Thereafter, macromolecular polyester topcoat paint was applied to the steel sheet and baked 40seconds at a maximum temperature of 230°C to form a topcoat film of 15µm in dry thickness.

Primer paints used in **Example 2** had compositions containing the corrosion inhibitor **A** and the polyphosphate **B**, as shown in **Table 4**, while other primer paints for comparison had compositions shown in **Table 5**.

Properties of paint layers examined by the same tests as in **Example 1** are shown in **Table 6** (for inventive examples) and **Fig. 7** (for comparative examples).

**Table 4:**

| PRIMER PAINT COMPOSITIONS (INVENTIVE EXAMPLE) | | | | | |
|---|---|---|---|---|---|
| No | pretreatment | polyphosphate **B** | | | a total ratio (parts by weight) of **A**+**B** |
| | | kind | a ratio of **B** (parts by wt.) | a weight ratio of **A**/**B** | |
| 1 | I | a | 2 | 25/75 | 8 |
| 2 | I | a | 5 | 25/75 | 20 |
| 3 | I | a | 10 | 25/75 | 40 |
| 4 | I | a | 15 | 25/75 | 60 |
| 5 | I | a | 20 | 25/75 | 80 |
| 6 | I | a | 30 | 25/75 | 120 |
| 7 | I | a | 5 | 10/90 | 50 |
| 8 | I | a | 13 | 25/75 | 50 |
| 9 | I | a | 25 | 50/50 | 50 |
| 10 | II | a | 13 | 25/75 | 50 |
| 11 | III | a | 13 | 25/75 | 50 |
| 12 | IV | a | 13 | 25/75 | 50 |
| 13 | V | a | 13 | 25/75 | 50 |
| 14 | I | a | 13 | 25/75 | 50 |
| 15 | I | c | 13 | 25/75 | 50 |

**Table 5:**

| PRIMER PAINTS COMPOSITIONS (COMPARATIVE EXAMPLES) | | | | | |
|---|---|---|---|---|---|
| No | pretreatment | polyphosphate **B** | | | a total ratio (parts by weight) of **A**+**B** |
| | | kind | a ratio of **B** (parts by wt.) | a weight ratio of **A/B** | |
| 16 | I | a | 0.5 | 25/75 | 2 |
| 17 | I | a | 0.5 | 5/95 | 10 |
| 18 | I | a | 60 | 25/75 | 240 |
| 19 | I | a | 0 | 0/100 | 50 |
| 20 | I | a | 1.5 | 3/97 | 50 |
| 21 | I | a | 40 | 80/20 | 50 |
| 22 | I | a | 50 | 100/0 | 50 |
| 23 | I | a | 10 | 5/95 | 200 |
| 24 | I | zinc phosphate | | | 50 |
| 25 | I | wet silica | | | 50 |
| 26 | I | wet silica/ a =25/75 | | | 50 |
| 27 | I | silica particles/zinc phosphate=25/75 | | | 50 |

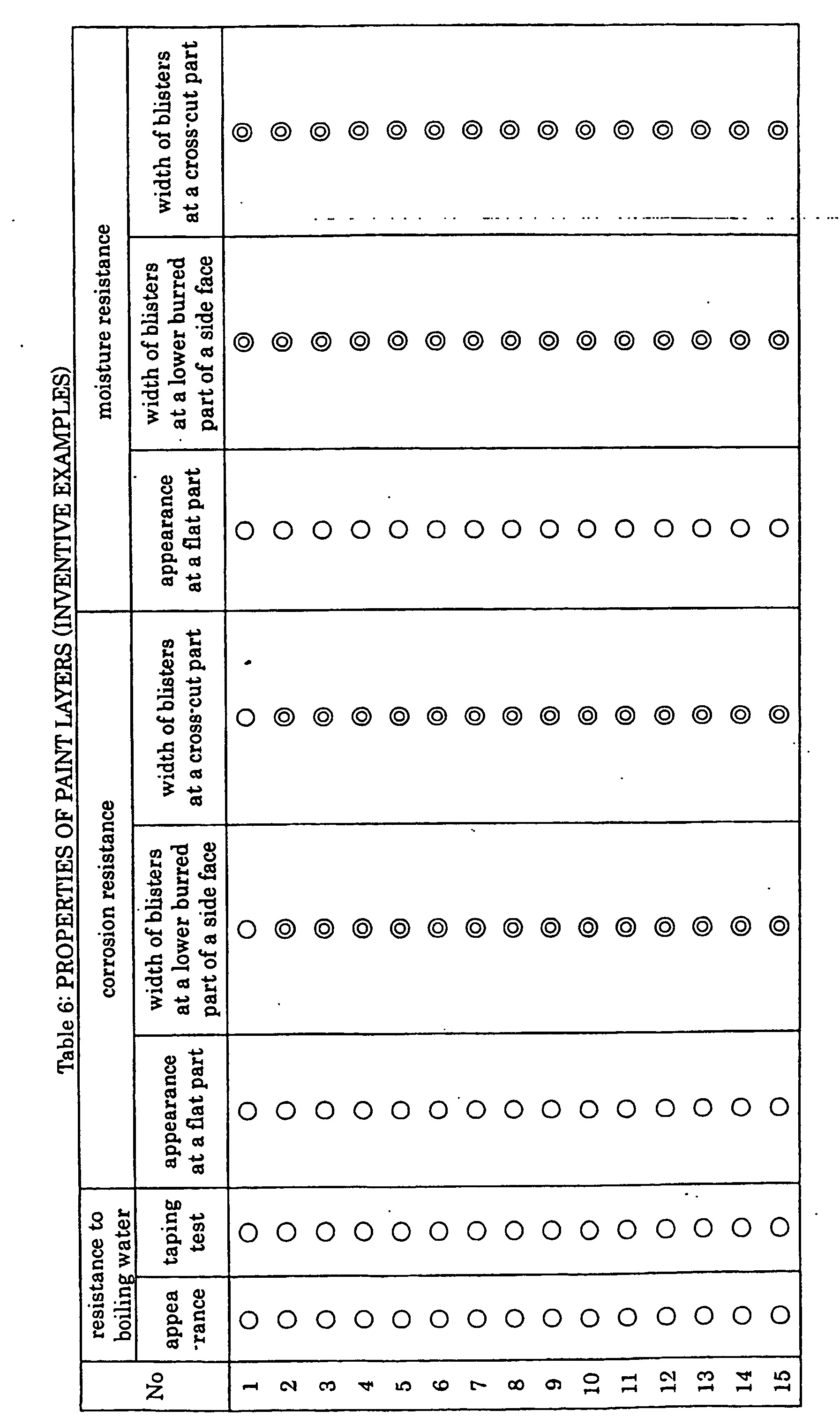

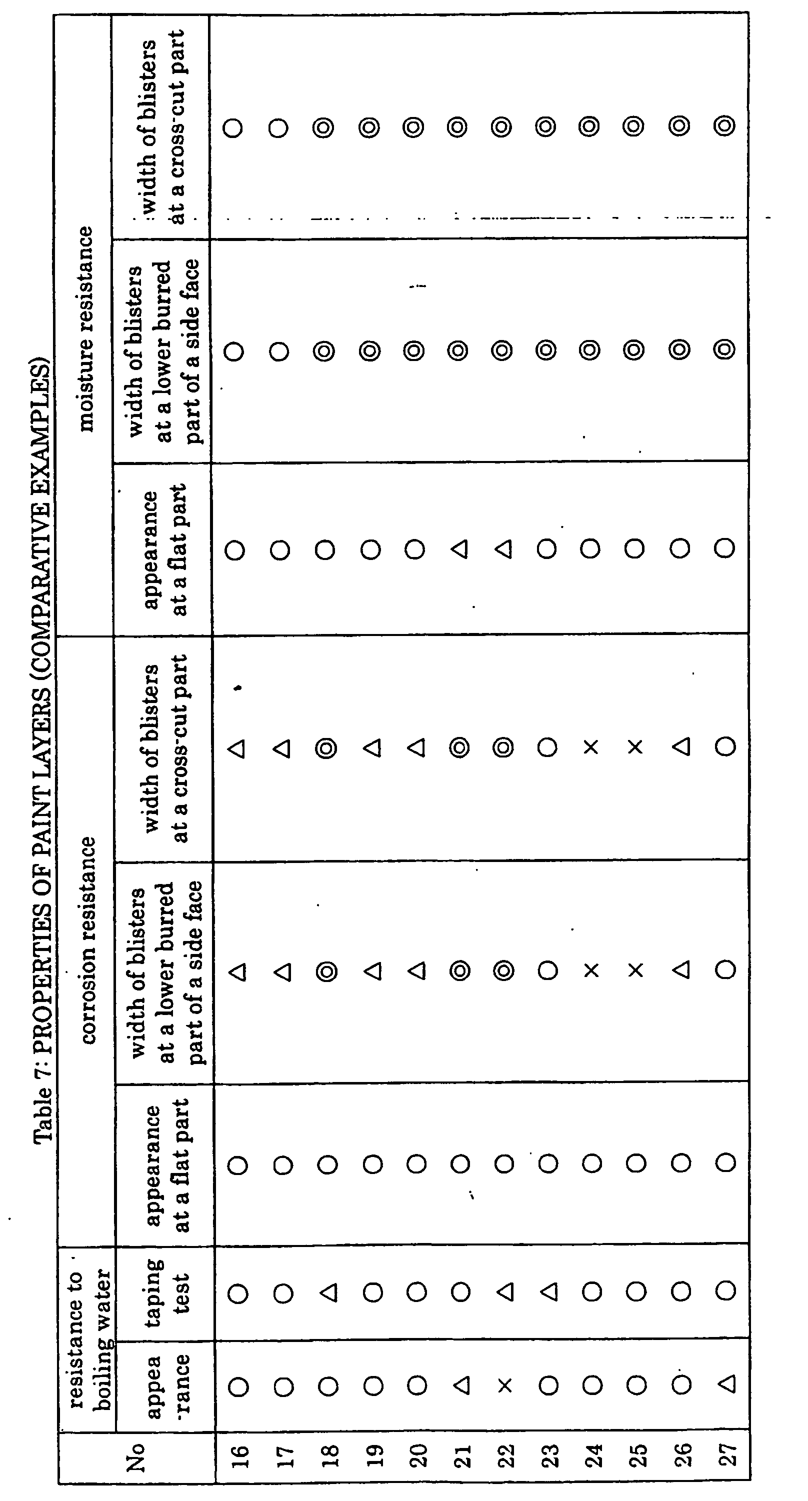

### Example 3:

### [Example]

Various plated steel sheets of 0.5mm in thickness were surface-conditioned with a ratio of 10mg/m² calculated as deposited Ni or alkali-degreased. A chemical agent having composition shown in **Table 8** was applied to each steel sheet by a bar-type applicator at a ratio of 1 ml/m² and dried at 100°C as pre-treatment for application of paint.

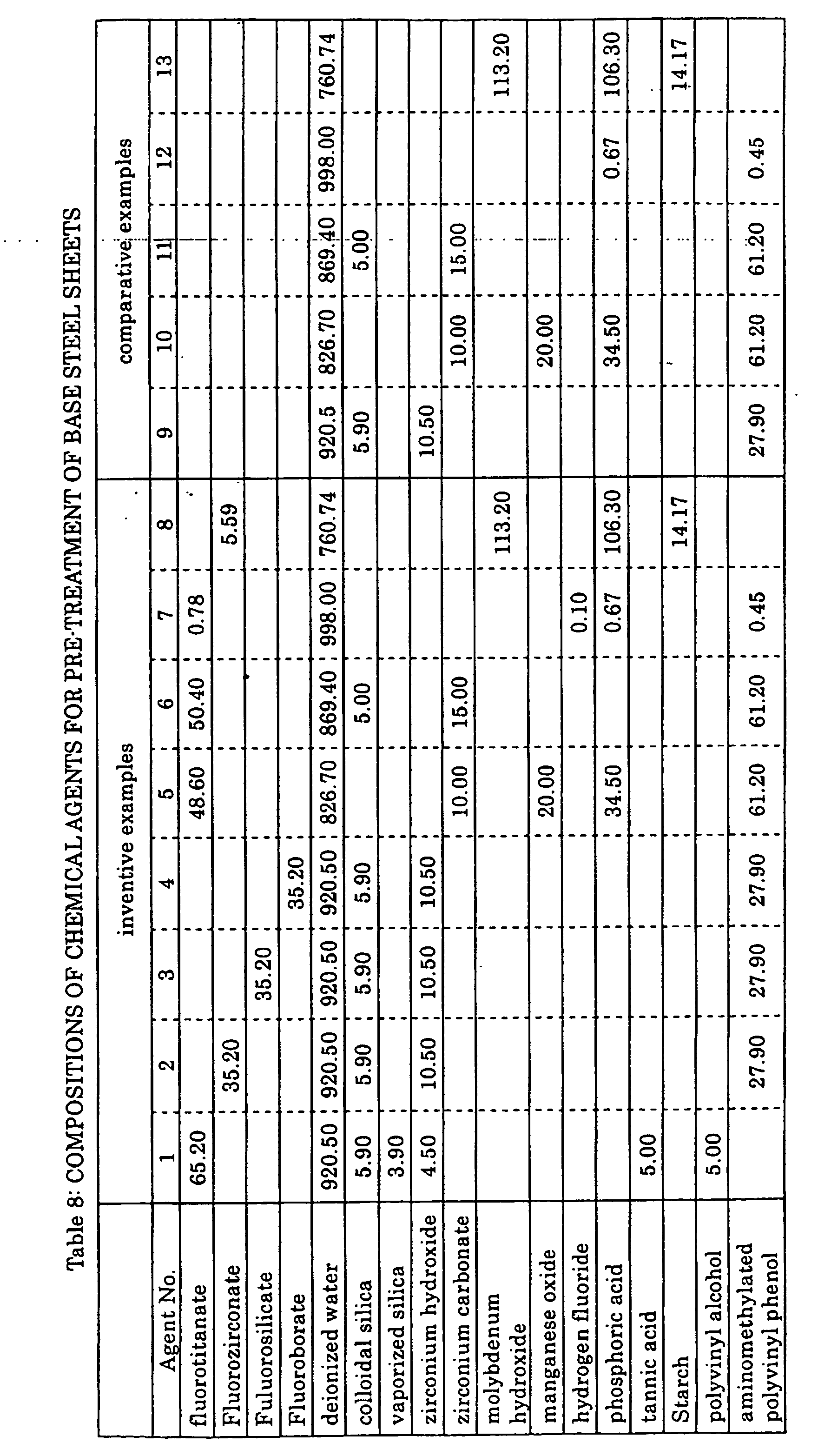

A processed surface layer was examined by X-ray fluorescence analysis to measure a total amount of F, Ti, Zr, Hf, Si, Ge, Sn and B deposited thereon. Results are shown in **Table 9**.

**Table 9:**

| DEPOSITION RATIOS (by mg/m²) IN RESPONSE TO KINDS OF OF CHEMICAL AGENTS | | | | | | | | | |
|---|---|---|---|---|---|---|---|---|---|
| Inventive Examples | Agent No. | 1 | 2 | 3 | 4 | 5 | 6 | 7 | 8 |
| | fluorides | 40.9 | 17.0 | 31.1 | 32.6 | 39.1 | 34.7 | 0.6 | 2.9 |
| | metals | 35.8 | 28.5 | 16.2 | 13.9 | 19.5 | 23.2 | 0.3 | 2.6 |
| Comparative Examples | Agent No. | 9 | 10 | 11 | 12 | 13 | | | |
| | fluorides | 0 | 0 | 0 | 5.8 | 0 | | | |
| | metals | 10.5 | 5.3 | 12.6 | 0 | 0 | | | |
| A ratio of metals means a total ratio of Ti, Zr, Hf, Si, Ge Sn and B deposited on a surface of a base steel sheet | | | | | | | | | |

Each base steel sheet was processed with a chemical agent to form a fluorided layer at a ratio calculated as deposited fluorine, as shown in **Table 10** (for inventive examples) and **Table 11** (for comparative examples).

**Table 10:**

| PREPARATION OF STEEL SHEETS FOR PAINT APPLICATION (INVENTIVE EXAMPLES) | | | | |
|---|---|---|---|---|
| No. | a coated-base steel sheet | | a fluoride coat | |
| | a plating layer | an adhesion ratio (g/m²) | a chemical agent No. | an adhesion ratio (mg/ m²) |
| 1 | Zn | 45 | 1 | 50 |
| 2 | Zn | 45 | 1 | 50 |
| 3 | Zn | 45 | 1 | 50 |
| 4 | Zn | 45 | 1 | 50 |
| 5 | Zn | 45 | 1 | 50 |
| 6 | Zn | 45 | 1 | 10 |
| 7 | Zn | 45 | 1 | 100 |
| 8 | Zn | 45 | 2 | 50 |
| 9 | Zn | 45 | 3 | 50 |
| 10 | Zn | 45 | 4 | 50 |
| 11 | Zn | 45 | 5 | 50 |
| 12 | Zn | 45 | 6 | 50 |
| 13 | Zn | 45 | 7 | 50 |
| 14 | Zn | 45 | 8 | 50 |
| 15 | Zn-5%Al | 45 | 1 | 50 |
| 16 | Zn-55%Al | 70 | 1 | 50 |
| 17 | Al | 70 | 1 | 50 |
| 18 | Zn-6Al-3%Mg | 70 | 1 | 50 |
| 19 | Zn-55%Al | 70 | 1 | 50 |
| 20 | Zn-55%Al | 70 | 7 | 50 |

**Table 11:**

| PREPARATION OF STEEL SHEETS FOR PAINT APPLICATION (COMPARATIVE EXAMPLES) | | | | |
|---|---|---|---|---|
| No. | a coated-base steel sheet | | a fluoride coat | |
| | a plating layer | an adhesion ratio (g/m²) | a chemical agent No. | an adhesion ratio (mg/m²) |
| 1 | Zn | 45 | 1 | 50 |
| 2 | Zn | 45 | 1 | 50 |
| 3 | Zn | 45 | 1 | 1 |
| 4 | Zn | 45 | 9 | 50 |
| 5 | Zn | 45 | 10 | 50 |
| 6 | Zn | 45 | 11 | 50 |
| 7 | Zn | 45 | 12 | 50 |
| 8 | Zn | 45 | 13 | 50 |
| 9 | Zn | 45 | phosphating | |
| 10 | Zn | 45 | tannic acid | |

After the chemical processing, two types of painted steel sheets were manufactured as follows:

The first group of painted steel sheets are coated with undercoats of 5µm in dry thickness and topcoats of 15µm in dry thickness. Primer paints based on a thermosetting epoxy-denatured macromolecular polyester were applied to the surface of the steel sheet and baked at a maximum temperature of 215°C, while macromolecular polyester topcoat paints were applied to the undercoats and baked 40seconds at a maximum temperature of 230°C.

The second group of painted steel sheets were coated with undercoats of 5µm in dry thickness and topcoats of 15µm in dry thickness. Primer paints based on a polyether sulfonate were applied to the steel sheets and baked 120 seconds at a maximum temperature of 340°C, while topcoat paints based on a polyether sulfonate containing PTFE (polytetrafluoroethylene) were applied to the undercoats and baked 180 seconds at a maximum temperature of 410°C.

In each case, paint compositions (shown in Tables 12 and 13) containing the corrosion inhibitor **A** and the polyphosphate **B** were used as primer paints.

In some of comparative examples, painted steel sheets were prepared from base steel sheet which were subjected to conventional chemical converting treatment using a phosphate or tannic acid, or to chemical converting treatment using the same chemical agent as in the inventive examples except for omission of fluoroacids. In others of comparative examples, primer paints containing either one of the corrosion inhibitor **A** and the polyphosphate **B** were also applied to base steel sheets.

**Table 12:**

| PRIMER PAINT COMPOSITIONS (INVENTIVE EXAMPLES) | | | | |
|---|---|---|---|---|
| No. | base resin | a corrosion inhibitor **A** (parts by wt.) | an **A/B** weight ratio | an **A**+**B** ratio (parts by wt.) |
| 1 | I | 2 | 25/75 | 8 |
| 2 | I | 13 | 25/75 | 50 |
| 3 | I | 30 | 25/75 | 150 |
| 4 | I | 5 | 10/90 | 50 |
| 5 | I | 25 | 50/50 | 50 |
| 6 | I | 13 | 25/75 | 50 |
| 7 | I | 13 | 25/75 | 50 |
| 8 | I | 13 | 25/75 | 50 |
| 9 | I | 13 | 25/75 | 50 |
| 10 | I | 13 | 25/75 | 50 |
| 11 | I | 13 | 25/75 | 50 |
| 12 | I | 13 | 25/75 | 50 |
| 13 | I | 13 | 25/75 | 50 |
| 14 | I | 13 | 25/75 | 50 |
| 15 | I | 13 | 25/75 | 50 |
| 16 | I | 13 | 25/75 | 50 |
| 17 | I | 13 | 25/75 | 50 |
| 18 | I | 13 | 25/75 | 50 |
| 19 | II | 13 | 25/75 | 50 |
| 20 | II | 13 | 25/75 | 50 |
| Base resin **I** is epoxy-denatured macromolecular polyester primer with macromolecular polyester topcoat, and **II** is polyether sulfonate (PES) primer with PES/PTFE topcoat. | | | | |

**Table 13:**

| PRIMER PAINT COMPOSITIONS (COMPARATIVE EXAMPLES) | | | | |
|---|---|---|---|---|
| No. | base resin | a corrosion inhibitor **A** (parts by wt.) | an **A/B** weight ratio | an **A**+**B** ratio (parts by wt.) |
| 1 | I | ion-exchanged silica solely | | 50 |
| 2 | I | aluminum polyphosphate solely | | 50 |
| 3 | I | 13 | 25/75 | 50 |
| 4 | I | 13 | 25/75 | 50 |
| 5 | I | 13 | 25/75 | 50 |
| 6 | I | 13 | 25/75 | 50 |
| 7 | I | 13 | 25/75 | 50 |
| 8 | I | 13 | 25/75 | 50 |
| 9 | I | 13 | 25/75 | 50 |
| 10 | I | 13 | 25/75 | 50 |

Each painted steel was examined by the same tests as in **Example 1** to research properties of a paint layer such as boiling water resistance, corrosion resistance and moisture resistance. Results are shown in **Tables 14** (for inventive examples) and **Table 15** (for comparative examples).

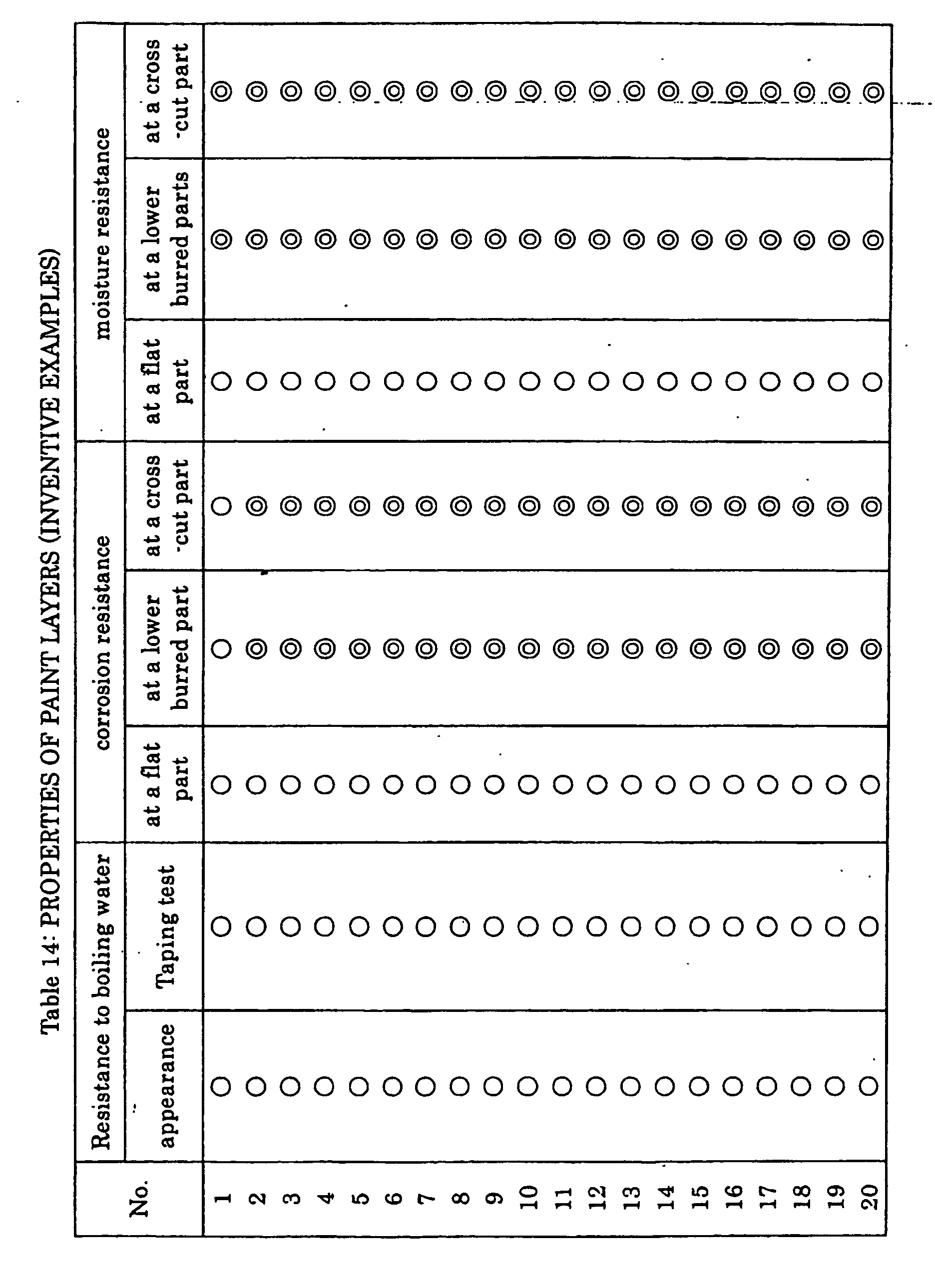

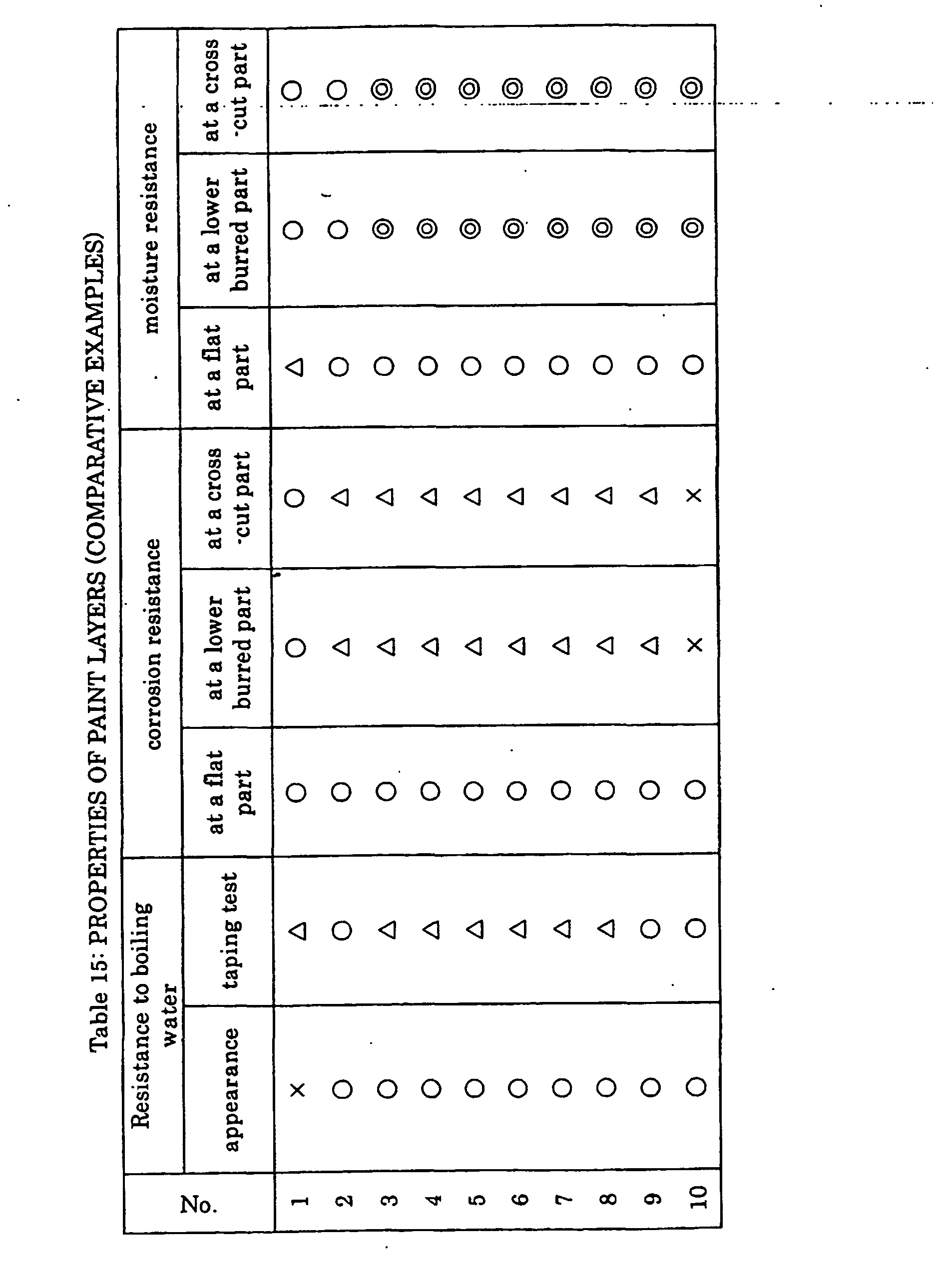

It is noted from **Table 15** that paint layers formed on steel sheets as comparative examples had disadvantages on at least one or more of boiling water resistance, corrosion resistance and moisture resistance. On the other hand, paint layers (shown in **Table 14**) formed on steel sheets as inventive examples were superior in any of boiling water resistance, corrosion resistance and moisture resistance. The comparison proves that painted steel sheets according to the present invention are excellent in all of boiling water resistance, corrosion resistance and moisture resistance without inclusion of chromium compounds.

According to the present invention as above-mentioned, there is provided a painted steel sheet excellent in corrosion and moisture resistance due to co-existence of the corrosion inhibitor **A** and the polyphosphate **B** in a paint layer without use of chromium compounds, which would put harmful influences on the environment. Since the polyphosphate **B** controls dissolution of Ca ion from the corrosion inhibitor **A**, the corrosion inhibitor **A** maintains its corrosion-inhibiting faculty over a long term.

## Claims

1. Paint composition for formation of corrosion and moisture-resistant paint layer on a surface of a metal sheet, which comprises base resin, a corrosion inhibitor prepared from porous silica particles, to which Ca ion is bonded by ion-exchange, a polyphosphate and optionally other pigment(s).

2. The paint composition defined in Claim 1, wherein the base resin is a polyester, macromolecular polyester, epoxy, epoxy-denatured polyester, epoxy-denatured macromolecular polyester or polyether sulfonate.

3. The paint composition defined in Claim 1 or 2, wherein the corrosion inhibitor is porous silica particles, to which Ca ion is bonded at a ratio of 3-40%.

4. The paint composition defined in anyone of claims 1 to 3, which contains the corrosion inhibitor at a ratio of 2-50 parts by weight based on 100 parts by weight of resinous components.

5. The paint composition defined in anyone of claims 1 to 4, wherein the polyphosphate is one or more of aluminum pyrophosphate, aluminum metaphosphate or aluminum dihydrogentripolyphosphate.

6. The paint composition defined in anyone of of claims 1 to 5, which contains the corrosion inhibitor and the polyphosphate at an A/B weight ratio of 60/40 to 5/95 and at an **A**+**B** ratio of 5-150 parts by weight based on 100 parts by weight of resinous components, wherein **A** and **B** represents the corrosion inhinbitor and the polyphosphate, respectively.

7. The paint composition defined in anyone of claims 1 to 6, wherein the other pigment(s) are one or more of titanium oxide, calcium carbonate and silica.

8. A painted metal sheet having a paint layer, which comprises base resin, a corrosion inhibitor prepared from porous silica particles, to which Ca ion is bonded by ion-exchange, a polyphosphate and optionally other pigment(s), formed on a surface of a base metal sheet.

9. The painted metal sheet defined in Claim 8, wherein the base metal sheet is a steel sheet coated with a Zn, Zn-Al or Al plating layer.

10. The painted metal sheet defined in claim 8 or 9, wherein the base metal sheet has a surface chemically treated with a chemical agent containing one or more of chromic, phosphoric, silicic, zirconic, manganic, titanic acid hydrofluoric acids.

11. The painted metal sheet defined in anyone of claims 8 to 10, wherein the base metal sheet has a surface chemically treated with a chemical agent containing at least one of fluoroacids.

12. The painted metal sheet defined in Claim 11, wherein the fluoroacids are one or more of H₂TiF₆, H₂ZrF₆, H₂HfF₆, H₂SiF₆, H₂SnF₆ and HBF₄.

13. The painted metal sheet defined in claim 11 or 12, wherein fluorides are deposited on the surface of the steel sheet at a ratio of 0.5-500mg/m² calculated as deposited fluorine and/or at a ratio of 0.1-500mg/m² cancluated as deposited metals in total.

14. The painted metal sheet defined in anyone of claims 8 to 13, wherein the paint layer is an undercoat on which a topcoat is formed.

15. Ths painted metal sheet defined in anyone of claims 8 to 14, wherein the base resin is polyester, macromolecular polyester, epoxy, epoxy-denatured polyester, epoxy-denatured macromolecular polyester or polyether sulfonate.

16. The painted metal sheet defined in anyone of claims 8 to 15, wherein the corrosion inhibitor is porous silica particles, to which Ca ion is bonded at a ratio of 3-40%.

17. The painted metal sheet defined in anyone of claims 8 to 16, which contains the corrosion inhibitor at a ratio of 2-50 parts by weight based on 100 parts by weight of resinous components.

18. The painted metal sheet defined in anyone of claims 8 to 17, wherein the polyphosphate is one or more of aluminum pyrophosphate, aluminum metaphosphate or aluminum dihydrogentripolyphosphate.

19. The painted metal sheet defined in anyone of claims 8 to 18, which contains the corrosion inhibitor and the polyphosphate at an **A/B** weight ratio of 60/40 to 5/95 and at an **A**+**B** ratio of 5-150 parts by weight based on 100 parts by weight of resinous components, wherein **A** and **B** represents the corrosion inhinbitor and the polyphosphate, respectively.

20. The painted metal sheet defined in anyone of claims 8 to 19, wherein the other pigment(s) are one or more of titanium oxide, calcium carbonate and silica.

## Patentansprüche

1. Anstrichzusammensetzung zur Bildung einer korrosions- und feuchtigkeitsbeständigen Anstrichschicht auf einer Oberfläche eines Metallblechs, welche ein Grundharz, einen Korrosionsinhibitor, hergestellt aus porösen Silicateilchen, auf welchen Ca-Ion durch lonenaustausch gebunden ist, ein Polyphosphat und gegebenenfalls andere Pigment(e) umfaßt.

2. Anstrichzusammensetzung, wie in Anspruch 1 definiert, wobei das Grundharz ein Polyester, makromolekularer Polyester, Epoxy, Epoxy-denaturierter Polyester, Epoxy-denaturierter makromolekularer Polyester oder Polyethersulfonat ist.

3. Anstrichzusammensetzung, wie in Anspruch 1 oder 2 definiert, wobei der Korrosionsinhibitor poröse Silicateilchen ist, an welche Ca-Ion mit einem Verhältnis von 3-40% gebunden ist.

4. Anstrichzusammensetzung, wie in einem der Ansprüche 1 bis 3 definiert, welche den Korrosionsinhibitor in einem Verhältnis von 2-50 Gew.-Teilen, bezogen auf 100 Gew.-Teile harzartiger Komponenten, enthält.

5. Anstrichzusammensetzung, wie in einem der Ansprüche 1 bis 4 definiert, wobei das Polyphosphat ein oder mehrere von Aluminiumpyrophosphat, Aluminiummetaphosphat oder Aluminiumdihydrogentripolyphosphat ist.

6. Anstrichzusammensetzung, wie in einem der Ansprüche 1 bis 5 definiert, welche den Korrosionsinhibitor und das Polyphosphat in einem A/B-Gewichtsverhältnis von 60/40 bis 5/95 und in einem A+B-Verhältnis von 5-150 Gew.-Teilen, bezogen auf 100 Gew.-Teile harzartiger Komponenten, enthält, wobei A und B den Korrosionsinhibitor bzw. das Polyphosphat darstellen.

7. Anstrichzusammensetzung, wie in einem der Ansprüche 1 bis 6 definiert, wobei das bzw. die anderen Pigment(e) ein oder mehrere von Titanoxid, Calciumcarbonat und Silica ist bzw. sind.

8. Angestrichenes Metallblech mit einer Anstrichschicht, welche ein Grundharz, einen Korrosionsinhibitor, hergestellt aus porösen Silicateilchen, an welche Ca-Ion durch lonenaustausch gebunden ist, ein Polyphosphat und gegebenenfalls andere Pigment(e) umfasst, gebildet auf einer Oberfläche eines Grundmetallblechs.

9. Angestrichenes Metallblech, wie in Anspruch 8 definiert, wobei das Grundmetallblech ein Stahlblech, beschichtet mit einer Zn, Zn-Al oder Al-Plattierungsschicht, ist.

10. Angestrichenes Metallblech, wie in Anspruch 8 oder 9 definiert, wobei das Grundmetallblech eine mit einem chemischen Mittel, enthaltend ein oder mehrere von Chrom-, Phosphor-, Silicium-, Zirkonium-, Mangan-, Titansäure-Fluorwasserstoffsäuren, chemisch behandelte Oberfläche aufweist.

11. Angestrichenes Metallblech, wie in einem der Ansprüche 8 bis 10 definiert, wobei das Grundmetallblech eine mit einem chemischen Mittel, enthaltend mindestens eine der Fluorsäuren, chemisch behandelte Oberfläche aufweist.

12. Angestrichenes Metallblech, wie in Anspruch 11 definiert, wobei die Fluorsäuren eine oder mehrere von H₂TiF₆, H₂ZrF₆, H₂HfF₆, H₂SiF₆, H₂SnF₆ und HBF₄ sind.

13. Angestrichenes Metallblech, wie in Anspruch 11 oder 12 definiert, wobei die Fluoride auf der Oberfläche des Stahlblechs in einem Verhältnis von 0,5-500 mg/m², berechnet als abgeschiedenes Fluor, und/oder in einem Verhältnis von 0,1-500 mg/m², berechnet als abgeschiedene Metalle im gesamten, abgeschieden sind.

14. Angestrichenes Metallblech, wie in einem der Ansprüche 8 bis 13 definiert, wobei die Anstrichschicht eine Unterschicht ist, worauf eine Oberschicht gebildet ist.

15. Angestrichenes Metallblech, wie in einem der Ansprüche 8 bis 14 definiert, wobei das Grundharz Polyester, makromolekularer Polyester, Epoxy, Epoxy-denaturierter Polyester, Epoxy-denaturierter makromolekularer Polyester oder Polyethersulfonat ist.

16. Angestrichenes Metallblech, wie in einem der Ansprüche 8 bis 15 definiert, wobei der Korrosionsinhibitor poröse Silicateilchen ist, worauf Ca-Ion in einem Verhältnis von 3-40% gebunden ist.

17. Angestrichenes Metallblech, wie in einem der Ansprüche 8 bis 16 definiert, welches den Korrosionsinhibitor in einem Verhältnis von 2-50 Gew.-Teilen, bezogen auf 100 Gew.-Teile harzartiger Komponenten, enthält.

18. Angestrichenes Metallblech, wie in einem der Ansprüche 8 bis 17 definiert, wobei das Polyphosphonat eines oder mehrere von Aluminiumpyrophosphat, Aluminiummetaphosphat oder Aluminiumdihydrogentripolyphosphat ist.

19. Angestrichenes Metallblech, wie in einem der Ansprüche 8 bis 18 definiert, welches den Korrosionsinhibitor und das Polyphosphat in einem A/B-Gewichtsverhältnis von 60/40 bis 5/95 und in einem A+B-Verhältnis von 5-150 Gew.-Teilen, bezogen auf 100 Gew.-Teile harzartiger Komponenten, enthält, wobei A und B den Korrosionsinhibitor bzw. das Polyphosphat darstellen.

20. Angestrichenes Metallblech, wie in einem der Ansprüche 8 bis 19 definiert, wobei das bzw. die anderen Pigment(e) ein oder mehrere von Titanoxid, Calciumcarbonat und Silica ist bzw. sind.

## Revendications

1. Composition de peinture pour formation d'un feuil de peinture résistant à la corrosion et à l'humidité sur une surface d'une tôle métallique, qui comprend une résine de base, un inhibiteur de corrosion préparé à partir de particules de silice poreuse auxquelles un ion Ca est lié par échange d'ions, un polyphosphate et en option un ou plusieurs autres pigments.

2. Composition de peinture selon la revendication 1, dans laquelle la résine de base est un polyester, un polyester macromoléculaire, un époxyde, un polyester dénaturé par un époxy, un polyester macromoléculaire dénaturé par un époxyde ou un polyéthersulfonate.

3. Composition de peinture selon la revendication 1 ou 2, dans laquelle l'inhibiteur de corrosion est constitué de particules de silice poreuse auxquelles l'ion Ca est lié selon un rapport de 3-40 %.

4. Composition de peinture selon l'une quelconque des revendications 1 à 3, qui contient l'inhibiteur de corrosion selon un rapport de 2-50 parties en poids pour 100 parties en poids des composants résineux.

5. Composition de peinture selon l'une quelconque des revendications 1 à 4, dans laquelle le polyphosphate est constitué d'un ou plusieurs du pyrophosphate d'aluminium, du métaphosphate d'aluminium ou du dihydrogénotripolyphosphate d'aluminium.

6. Composition de peinture selon l'une quelconque des revendications 1 à 5, qui contient l'inhibiteur de corrosion et le polyphosphate selon un rapport en poids A/B de 60/40 à 5/95, la proportion de A+B étant de 5-150 parties en poids pour 100 parties en poids des composants résineux, A et B représentant respectivement l'inhibiteur de corrosion et le polyphosphate.

7. Composition de peinture selon l'une quelconque des revendications 1 à 6, dans laquelle le ou les autres pigments sont constitués d'un ou plusieurs de l'oxyde de titane, du carbonate de calcium et de la silice.

8. Tôle métallique peinte portant une couche de peinture qui comprend une résine de base, un inhibiteur de corrosion préparé à partir de particules de silice poreuse auxquelles l'ion Ca est lié par échange d'ions, un polyphosphate et en option un ou plusieurs autres pigments, formés sur une surface de la tôle métallique de base.

9. Tôle métallique peinte selon la revendication 8, dans laquelle la tôle métallique de base est une tôle d'acier revêtue d'une couche de revêtement de Zn, de Zn.Al ou d'Al.

10. Tôle métallique peinte selon la revendication 8 ou 9, dans laquelle la tôle métallique de base possède une surface chimiquement traitée par un agent chimique contenant un ou plusieurs des acides chromique, phosphorique, silicique, zirconique, manganique, titanique et fluorhydrique.

11. Tôle métallique peinte selon l'une quelconque des revendications 8 à 10, dans laquelle la tôle métallique de base possède une surface chimiquement traitée par un agent chimique contenant au moins un acide fluoré.

12. Tôle métallique peinte selon la revendication 11, dans laquelle les acides fluorés sont constitués d'un ou plusieurs des acides H₂TiF₆, H₂ZrF₆, H₂HfF₆, H₂SiF₆, H₂SnF₆ et HBF₄.

13. Tôle métallique peinte selon la revendication 11 ou 12, dans laquelle des fluorures sont déposés sur la surface de la tôle métallique en une quantité de 0,5 à 5500 mg/m², calculée en fluor déposé, et/ou en une quantité de 0,1 à 500 mg/m², calculée en métaux déposés totaux.

14. Tôle métallique peinte selon l'une quelconque des revendications 8 à 13, dans laquelle la couche de peinture est une sous-couche sur laquelle est formée une couche de finition.

15. Tôle métallique peinte selon l'une quelconque des revendications 8 à 14, dans laquelle la résine de base est un polyester, un polyester macromoléculaire, un époxyde, un polyester dénaturé par un époxy, un polyester macromoléculaire dénaturé par un époxyde ou un polyéthersulfonate.

16. Tôle métallique peinte selon l'une quelconque des revendications 8 à 15, dans laquelle l'inhibiteur de corrosion est constitué de particules de silice poreuse auxquelles l'ion Ca est lié selon un rapport de 3-40 %.

17. Tôle métallique peinte selon l'une quelconque des revendications 8 à 16, qui contient l'inhibiteur de corrosion selon un rapport de 2-50 parties en poids pour 100 parties en poids des composants résineux.

18. Tôle métallique peinte selon l'une quelconque des revendications 8 à 17, dans laquelle le polyphosphate est constitué d'un ou plusieurs du pyrophosphate d'alurninium, du métaphosphate d'aluminium ou du dihydrogénotripolyphosphate d'aluminium.

19. Tôle métallique peinte selon l'une quelconque des revendications 8 à 18, qui contient l'inhibiteur de corrosion et le polyphosphate selon un rapport en poids A/B de 60/40 à 5/95, la proportion de A+B étant de 5-150 parties en poids pour 100 parties en poids des composants résineux, A et B représentant respectivement l'inhibiteur de corrosion et le polyphosphate.

20. Tôle métallique peinte selon l'une quelconque des revendications 8 à 19, dans laquelle le ou les autres pigments sont constitués d'un ou plusieurs de l'oxyde de titane, du carbonate de calcium et de la silice.
